# EUROPEAN PATENT SPECIFICATION

(11) **EP 0 961 683 B1**
(45) Date of publication and mention of the grant of the patent: **28.05.2003**
(21) Application number: 97939294.1
(22) Date of filing: 05.09.1997
(51) Int. Cl.: B30B 5/02, B21D 22/22

(54) **A DEVICE FOR HOLDING A BLANK IN A FLUID CELL PRESS AND A FLUID CELL PRESS**
GERÄT ZUM HALTEN EINES ZUSCHNITTS IN EINER FLÜSSIGZELLENPRESSE, UND FLÜSSIGZELLENPRESSE
DISPOSITIF PERMETTANT DE MAINTENIR UN FLAN DANS UNE PRESSE A CELLULE REMPLIE DE FLUIDE ET PRESSE A CELLULE REMPLIE DE FLUIDE

(43) Date of publication of application: 08.12.1999
(73) Proprietor: FLOW HOLDINGS SAGL, 6919 Carabietta (CH)
(72) Inventor: HELLGREN, Keijo, S-722 41 Västeras (SE); SVENSSON, Lennart, S-723 46 Västeras (SE)
(74) Representative: Henningsson, Gunnar
(86) International application number: SE9701477
(87) International publication number: WO99012730

(56) References cited:
- WO-A1-92/15411
- AU-B- 477 063
- US-A- 3 566 650
- US-A- 3 751 956

## Description

### TECHNICAL FIELD

The present invention relates to a device for holding, in a braking manner, a preferably sheet-formed blank when forming the blank in a fluid cell press, wherein the blank is formed by applying a hydraulic forming pressure, via an elastic diaphragm, to one side of the blank, the device comprising first means for generating a hydraulic blank holder pressure and second means for supplying this pressure to a movable member and maintaining this pressure, whereby the movable member is designed, as long as the blank holder pressure is maintained, to hold part of the blank against a support in a braking manner.

The invention also relates to a fluid cell press with such a device.

The invention is particularly well suited for use in so-called flexforming of thin sheets, for example for forming of car body parts for the vehicle industry.

### BACKGROUND ART

Fluid cell presses are used for forming sheet-formed blanks, for example plates of steel or aluminium. The plate is placed in the press such that one side thereof faces a forming tool. On the other side of the plate, an elastic diaphragm is arranged. A closed space outside the diaphragm, as viewed from the plate, constitutes the so-called pressure cell and this space is filled with a pressure medium during the forming process. By pumping more pressure medium into the pressure cell, the pressure in the pressure cell is raised. This causes the elastic diaphragm to be pressed against the plate while being stretched, the plate in turn being formed around or in the forming tool. When the plate has completely conformed to the tool, the pressure in the pressure cell is relieved, the diaphragm is removed and the formed part can be lifted out of the press.

During the forming process, the plate undergoes both elastic stretch and plastic strain. The elastic stretch is recovered when the forming pressure is relieved, but the plastic strain remains. The plastic strain gives rise to an increases stiffness of the formed part whereas the elastic stretch causes spring back and thus deteriorated dimensional stability. It is therefore necessary to regulate, as far as possible, the ratio between stretch and strain during the forming process.

To influence the stretch/strain ratio during the forming, the fluid cell press is often equipped with some type of device for braking the movement of the blank or plate. This device is often referred to as a blank holder. Such a holder is disclosed in WO-A1-9 215 411. In the following, the designation blank holder and the designation device for braking the movement of the plate will be used. The task of the blank holder is to prevent or brake the movement of some parts of the plate. Usually, the blank holder is allowed to brake the movement of some of the peripheral parts of the plate, for example its four sides. By braking the movement of some of the parts of the plate during the forming, the yield point of the material and hence the plastic strain will generally be attained at an earlier stage.

One known type of blank holder is based on the peripheral parts of the plate during the forming resting against support dikes with blank holder surfaces. During the forming process, the forming pressure in the pressure cell is brought, via the diaphragm to act on the peripheral parts of the plate, which parts are thus pressed against the blank holder surfaces. In this way, a frictional force arises between the blank holder surface and the plate, which force brakes the movement of the plate in a direction towards the tool when the plate is formed around the tool.

### TECHNICAL PROBLEM

With the known blank holder described above, the blank holder force will be proportional to the forming pressure. This results in the braking action being small during the initial stage of the forming phase, when the relative deformation is relatively great. In this way, the plastic strain will not arise until at the end of the forming process and the total stretch/strain becomes small, which has a negative influence on the stiffness and dimensional stability of the part.

US patent 3,751,956 describes a fluid-dynamic press with a blank holder wherein the blank holder force has been made independent of the forming pressure. The press described comprises a bed with a blank holder plate on which the plate to be formed is placed. A forming tool in the form of a die is arranged in an upper frame, which can be raised and lowered in relation to the bed. In the lower peripheral part of the forming tool, an annular blank holder member is arranged. When the plate is in position, the upper frame and the tool are lowered, such that the blank holder member is brought into contact with the plate, around the periphery thereof. The forming is performed by pumping in a pressure medium under the plate and pressing the plate upwards against the forming tool, the plate thus conforming to the forming tool.

The blank holder force is achieved and adjusted with the aid of a plurality of hydraulic cylinders with pistons, which are arranged in the upper frame, around the annular blank holder members. By supplying and removing hydraulic fluid to and from these cylinders, respectively, the pistons are brought to be pressed against the blank holder member with a varying force, the blank holder member thus in turn pressing the plate against the blank holder plate. This results in a frictional force, which may be varied and which brakes the movement of the peripheral parts of the plate.

With the device described in US 3,751,956, the blank holder force is thus varied independently of the forming pressure. The device may, for example, be used to achieve a relatively great blank holder force during the initial stage of the forming process and to thereafter successively reduce the blank holder force during the final stage.

Attempts have shown that particularly the initial strain in certain applications is quite decisive for obtaining the desired strain picture resulting in a high stiffness and good dimensional stability in the finished product. This applies particularly to the forming of double-curvature surfaces, for example ordinary car body parts for the vehicle industry, such as all the outer boardings of a passenger car. Especially when forming such parts, as soon as the desired extension of the plate is completed, the blank holder force should be reduced to a minimum to avoid rupture of the plate during the final forming.

From this follows, in practice, that as soon as a certain predetermined forming pressure has been attained, the blank holder force should be reduced to a minimum. With the prior art described above, it has not been possible to achieve such a reduction, with sufficiently high accuracy and good repeatability, at exactly the correct stage in the forming process. The prior art does not offer any means which make it possible to directly connect the reduction of the blank holder force to the achievement of a certain forming pressure. In this way, it has also not. been possible, using prior art flexforming technique, to attain the high demands made on stiffness, dimensional stability and repeatability when forming car body parts, which occurs, for example, within the modern car industry.

A further problem with the device disclosed in US 3,751,956 is that it comprises a plurality of pipes and means for respectively supplying and removing hydraulic fluid to and from the hydraulic cylinders. Such pipes and means are not only bulky but also constitute troublesome weak spots in the press structure. When flexforming large parts, forming pressures of upwards of 1400 bar are used. These high pressures make very heavy demands on, inter alia, the fatigue strength of the press, and therefore the weak spots mentioned above constitute a serious limitation for the use of the press.

It is therefore an object of the invention to provide a blank holder for fluid cell presses which makes it possible, in a simple way, to maintain a great plate or blank holder force during the initial stage of the forming and to rapidly reduce this force when a certain predetermined forming pressure has been achieved.

### THE SOLUTION

The above object is achieved with the present invention by a device of the kind mentioned in the introductory part of the description, which is characterized by a member which, while being directly influenced by the forming pressure, reduces the blank holder pressure when the forming pressure attains a predetermined value.

As the member is operating under the direct influence of the forming pressure, it is ensured that the blank holder force, which is proportional to the blank holder pressure, is reduced at precisely the right stage. This, in turn, means that the desired strain picture of the formed product can be obtained with great accuracy and with very good repeatability.

Further advantages of the invention will be clear from the appended claims. For example, by means of a control valve including spring members with a variable stiffness, the invention offers a possibility of accurately adjusting the forming pressure at which the blank holder pressure is to be reduced. Further, according to one embodiment, the means for generating the blank holder pressure are designed to be disconnected from the device and placed outside the press when the forming pressure is applied. In this way, the number of pipes, valves and pumps etc., which have to be in the press when the high forming pressure is applied, is reduced. The press thus becomes considerably less sensitive to fatigue stresses and may be used at high pressures or be made smaller.

### BRIEF DESCRIPTION OF THE DRAWINGS

An exemplifying embodiment of the invention will be described below with reference to the accompanying figures.

Figure 1 shows a schematic longitudinal section through a fluid cell press with a device according to the invention at each end.

Figure 2 shows, in more detail, a schematic cross section through an embodiment of a device according to the invention.

Figure 3 shows a cross section through part of a device according to the invention, when a blank in the form of a plate is being introduced into the press.

Figure 4 shows the part of the device shown in Figure 3, when the plate is braked under the influence of the applied blank holder pressure.

Figure 5 shows the part of the device shown in Figures 3 and 4 when the blank holder pressure is again reduced.

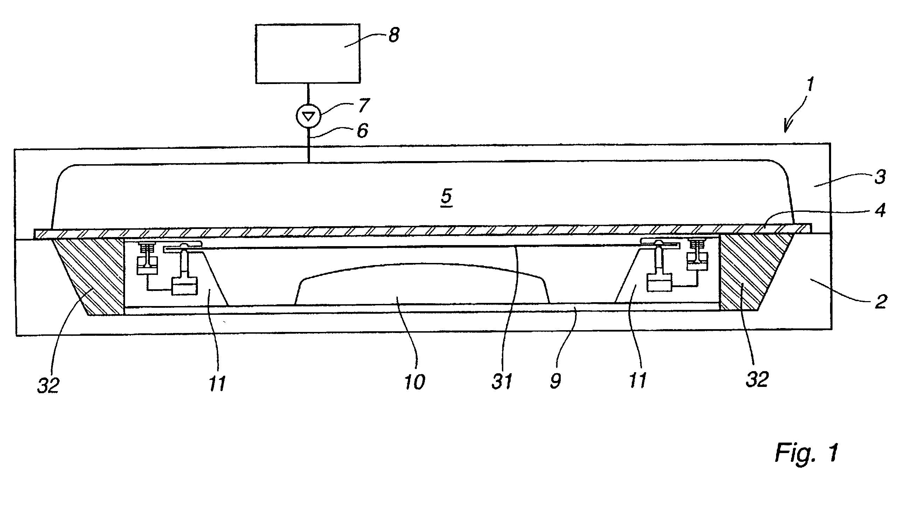

The fluid cell press 1 shown in Figure 1 comprises a bottom trough 2 and an upper part 3. In the lower part of the upper part 2, a flexible diaphragm 4 is attached such that a closed fluid cell 5 is defined by the diaphragm 4 and the upper part 2. A pressure pipe 6 opens out into the fluid press 5 for the supply of a pressure medium, which by means of a high-pressure pump 7 may be pumped from an external container 8 to the fluid cell 5. The upper part 3 is raisable and lowerable in relation to the bottom trough. In the figure the press is shown when the upper part 3 is in its lowered position, whereby the diaphragm 4 is secured by being pressed between the upper part and the bottom trough 2. To withstand the very great stresses which arise during flexforming, the press is prestressed in a manner known per se (but not shown) by means of a prestressed wire wound around the press.

In the bottom trough 2, a bottom plate 9 is arranged. A forming tool 10 is placed on and fixed to the bottom plate 9. In the example shown, the forming tool 10 consists of a positive, double-curvature mould for manufacturing a car roof. Also two blank holders 11 are arranged on the bottom plate, one at each end of the bottom plate 9. The space between the blank holders 11 and the wall of the bottom trough 2 is suitably filled with rubber 32 for preventing the diaphragm from being pressed down into this space under the influence of the forming pressure, thus being unnecessarily stretched.

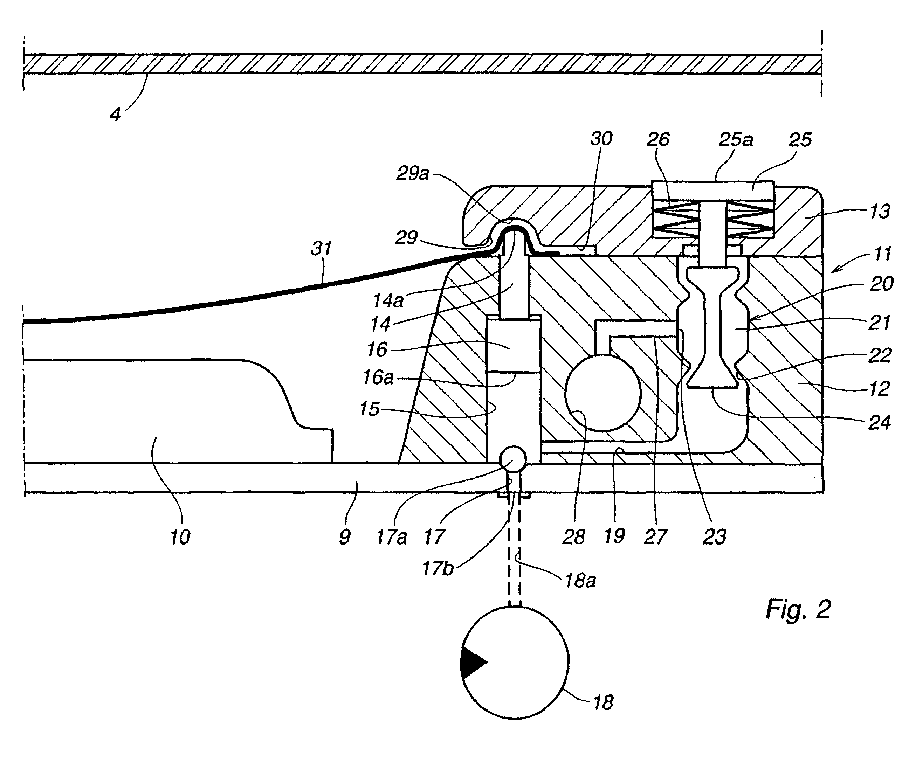

Figure 2 shows, in more detail, the right-hand blank holder 11 according to Figure 1. The blank holder comprises a body 12 and a cap or support 13, which is connected to the body 12. The body 12 further includes a movable part in the form of an elongated bead 14. The longitudinal axis of the bead 14 extends perpendicularly to the plane of the paper. The body 12 further includes a plurality of hydraulic cylinders 15, arranged along the longitudinal extent of the bead 14. In each hydraulic cylinder 15, a piston 16 is movably arranged. Via high-pressure pipes 17 and a nonreturn valve 17a, the hydraulic cylinders 15 communicate with a high-pressure connection 17b. This connection 17b may, for example when the blank holder 14 is outside the press 1, be connected to a pump 18 for generating the blank holder pressure by supplying pressurized hydraulic fluid to the cylinders 15.

The cylinders 15 also communicate with a control valve 20 via first channels 19. The control valve comprises a valve chamber 21 with an inlet 22 and an outlet 23. A valve body 24 is movably arranged between an open position, in which the inlet communicates with the outlet, and a closed position, in which this connection is blocked. The valve body 24 is secured to a valve head 25 which has a surface 25a which is arranged essentially on a level with that part of the cap 13 which faces the diaphragm 4. A resilient member in the form of a double cup spring 26 is adapted to press the valve body 24 towards its closed position (upwards in the figure). The inlet 22 of the control valve 20 is adapted such that, when the valve is open, it communicates with the first channels 19. The outlet 23 of the control valve communicates with a collection tank 28 by way of a second channel 27.

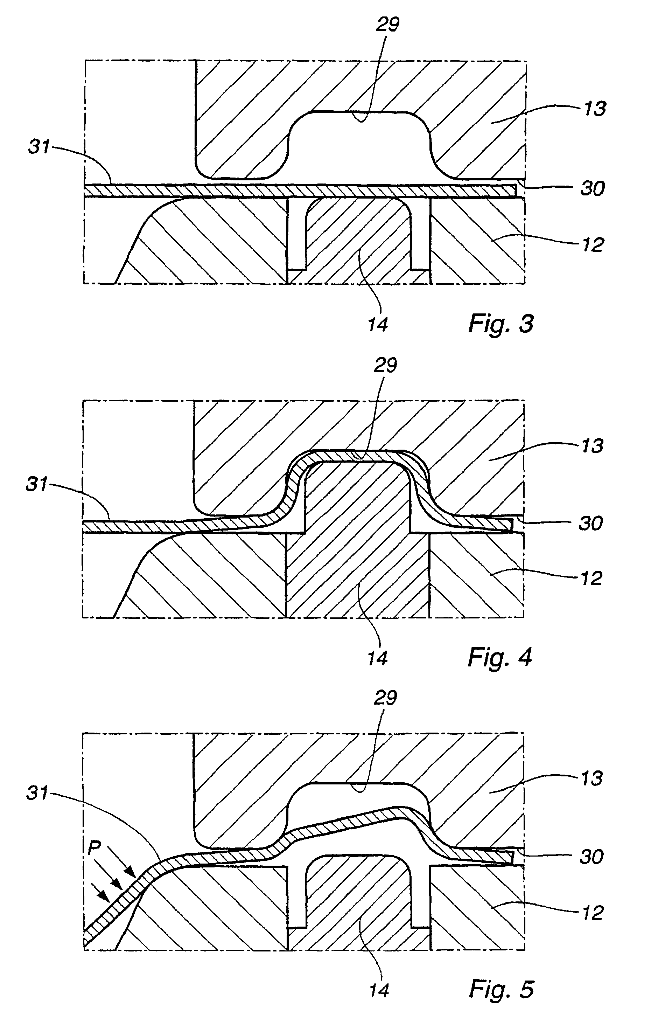

The bead 14 is movably arranged in the frame 12 such that the part of the bead which faces away from the pistons 16 may be displaced out of the frame and some distance into an elongated recess 29, which is provided in the cap 13, right in front of the bead 14 and parallel to the longitudinal axis thereof. Further, this part of the bead 14 exhibits a convex surface 14a, which, for example, may be defined by a radius of the cross section of the bead 14 shown in the figure. However, this convex surface 14a may assume a plurality of other outwardly bulging shapes and is thus defined by two radii connected by a straight line of the cross section of the bead (cf. Figs. 3-5). The recess 29 exhibits a concave surface 29a, which corresponds to the convex surface 14a of the bead. Further, between the cap 13 and the frame 12, beyond the bead 14 viewing from the tool 10, a slot 30 is disposed.

With reference to Figures 1 to 5, a forming cycle will be described below.

The fluid cell press 1 is opened by raising the upper part 3 with the diaphragm 4 to its upper position. The bottom plate 9 with the blank holder 11 is lifted out of the press. The movable beads 14 are in their recessed positions, such that the recesses 29 and the slots 30 are exposed (see Fig. 3). The valve body 24 of the control valve 20 is in its closed position.

The plate 31 which is to be formed is, for example, of sheet metal, aluminium, car body plate or sandwich plate and has a rectangular shape with the dimensions 1 x 2000 x 4000 mm. The short sides of the plate 31 are inserted between the frame 12 and the cap 13 of the blank holders 11, such that the two short ends of the plate extend somewhat into the slot 30. A pump 18 is connected by means of a connection pipe 18a to the connections 17b, and hydraulic fluid is pumped into the hydraulic cylinders 15 via the pipes 17. This causes the pistons 16 and hence the beads 14 to be pressed in a direction towards the recess 29 in the cap 13 (see Fig. 4). The plate is thus fixed, while being deformed, between the convex surfaces 14a of the beads 14 and the recesses 29. The pump 18 is adjusted to generate an appropriate blank holder pressure in the hydraulic cylinders 15, which blank holder pressure corresponds to a certain blank holder force. Normally, a blank holder pressure of about 200 bar is generated.

Besides being dependent on the blank holder pressure, the blank holder force is, in each blank holder 14, dependent on the thickness of the plate 31, the geometries of the bead 14 and recess 29 and on the coefficient of friction of the plate 31, the surface 14a of the bead, and the corresponding surface 29a of the recess 29. The geometries of the bead and the recess influence, among other things, the deformation work which contributes to the blank holder force. To increase the repeatability of the forming pressure, it may be desirable to make the blank holder force to a larger extent dependent on the deformation work than on the friction work. This can be achieved by allowing the bead and the recess, when the bead is in its inserted position, to define between them a play which is larger than the thickness of the plate. The play may, for example, be between 1.40 and 1.50, especially about 1.25 times larger than the thickness of the plate prior to the treatment.

When a suitable blank holder pressure has been achieved, the pump 18 is disconnected whereby the nonreturn valve 17b ensures that hydraulic fluid does not leak out and that the blank holder pressure is maintained.

When the plate 31 is fixed in this way to the blank holders 11, the bottom plate 9 with the blank holders 11 and the plate 31 are lifted into the press and placed in the bottom trough 2. The press is closed by lowering the cap 3, whereby the diaphragm is clamped between the upper part 3 and the bottom trough 2. After this, the high-pressure pump 7 is brought to supply pressure medium from the container 8 to the fluid cell 5. The diaphragm 4 is pressed against the plate 31 while the forming pressure is raised, the plate thus starting to be formed against the tool 10. During the initial increase of the forming pressure, the blank holder pressure and hence the blank holder force are maintained such that the plate 31 is approximately fixed between the bead 14 and the recess 29. This leads to a considerable stretching of the plate even during this initial stage, which gives the plate 31 the desired stiffness and dimensional stability. From experience it can be determined at which forming pressure the plate was subjected to the desired initial strain/stretch.

The forming pressure acts, via the diaphragm, also on the cap 13 of the two blank holders and hence on the surface 25a of the respective valve head 25. The stiffness of the spring members 26 is preselected such that their spring force is only just overcome by the effect of the forming pressure on the surface 25a, when the forming pressure has reached the magnitude which corresponds to the desired initial strain. Consequently, when the predetermined forming pressure has been attained, the valve bodies 24 will be displaced from their closed to their open positions, the connection between the hydraulic cylinders 15 and the collection tanks 28 thus being opened. Hydraulic fluid flows from the hydraulic cylinders 15, whereby the blank holder pressure is essentially instantaneously reduced to zero and the beads return to their initial positions (see Fig. 5). A certain blank holder pressure may remain for a shorter period of time after the pressure reduction. This remaining force arises because of the deformation of the plate 31 which occurred when the beads pressed the plate into the recess and which makes it necessary to again deform the plate 31 locally to be passed out of the recesses of the blank holders. By varying the geometries of the beads 14, the recesses 29 and the slots 30, it is possible, if desired, to vary the magnitude and the duration of this remaining blank holder force.

It should be noted in this context that the cap or support 13 may advantageously be designed such that, as is clear from Figures 1 and 2, those parts of the plate 31 which are to be braked are isolated from contact with the diaphragm 4. This greatly reduces the effect of the forming pressure on the blank holder force. Attempts have shown that, in a press with blank holders according to the prior art, the blank holder force is dependent up to 75% on the forming pressure and only 25% on the blank holder geometry. By a suitable design of the cap 13, it is possible with a device according to the invention to reduce the dependence of the blank holder force on the forming pressure to only 25%.

When the short ends of the plate 31 disappear out of the blank holders, the blank holder force terminates completely and the final forming of the plate can be made with a minimum risk of ruptures in the material.

After completed forming, the fluid cell press is again opened and the bottom plate with blank holders and the finished product are lifted out of the bottom trough. The product is lifted by the tool and the removed hydraulic fluid is returned from the collection tank 28 to the pump 18 or a reservoir therefor (not shown).

The invention is not limited to the embodiment described above but may be varied within the scope of the claims. For example, the different cylinders along one and the same bead may have a differently large pressure-absorbing. area 16a. By supplying one and the same blank holder pressure to the various pistons 16, it is thus possible to achieve different blank holder forces along the longitudinal extent of the bead. Another way of varying the blank holder force along the bead may be to supply different blank holder pressures to the different pistons 16 along one and the same bead. The different beads 16 and their respective cylinders must then be separated from each other from the point of view of pressure. By varying the blank holder force along the length of the beads, it is possible to further check the change in material properties at the different parts of the plate during the forming process.

## Claims

1. A device for holding, in a braking manner, a preferably sheet-formed blank (31) when forming the blank in a fluid cell press (1), wherein the blank is formed by applying a hydraulic forming pressure via an elastic diaphragm (4) to one side of the blank, which device comprises first means (18) for generating a hydraulic blank holder pressure and second means (15, 16, 17a) for supplying this pressure to a movable member (14) and maintaining this pressure, the movable member being adapted, as long as the blank holder pressure is maintained, to hold part of the blank in a braking manner against a support (13), **characterized by** means (20) comprising a valve with a valve head (25) which exhibits at least one surface (25a) which is to be exposed to the forming pressure and one valve body (24) which means, under the direct influence of the forming pressure, reduce the blank holder pressure when the forming pressure attains a predetermined value.

2. A device according to claim 1, **characterized in that** the means (20) comprise the valve head (25) which is connected to the valve body (24).

3. A device according to claim 2, **characterized in that** the valve also comprises an inlet (22) which communicates with the means (15, 16, 17a) for supplying and maintaining the hydraulic blank holder pressure, an outlet (23) and a resilient member (26), that the valve body (24) is movable between an open position, in which the inlet (22) communicates with the outlet (23), and a closed position, in which the inlet (22) does not communicate with the outlet (23), the resilient member (26) being prestressed to press the valve body (24) in a direction opposite to the action of the forming pressure towards the closed position.

4. A device according to claim 3, **characterized in that** the stiffness of the resilient member (26) is adjustable for variation of the forming pressure at which the valve (20) opens.

5. A device according to any of the preceding claims, **characterized in that** the first means (18) for generating the blank holder pressure are adapted to be disconnected from the device and placed outside the fluid cell press (1) when the forming pressure is applied.

6. A fluid cell press comprising a device according to any of the preceding claims.

## Patentansprüche

1. Vorrichtung zum Halten in einer Bremswirkung ausübenden Weise eines vorzugsweise schichtförmigen Zuschnitts (31) beim Formen des Zuschnitts in einer Fluidzellenpresse (1), wobei der Zuschnitt durch Ausüben eines hydraulischen formgebenden Druckes mittels einer elastischen Membran (4) auf eine Seite des Zuschnitts geformt wird, wobei die Vorrichtung eine erste Einrichtung (18) zum Erzeugen eines hydraulischen Druckes zum Halten des Zuschnitts und eine zweite Einrichtung (15, 16, 17a) zum Zuführen dieses Druckes zu einem beweglichen Element (14) und zum Aufrecht erhalten dieses Druckes aufweist, wobei das bewegliche Element so ausgebildet ist, solange der Druck zum Halten des Zuschnitts Aufrecht erhalten wird, einen Teil des Zuschnitts in einer Bremswirkung ausübenden Weise gegen eine Halterung (13) zu halten, **gekennzeichnet durch** eine Einrichtung (20) mit einem Ventil mit einem Ventilkopf (25), der mindestens eine Oberfläche (25a) aufweist, die dem formgebenden Druck auszusetzen ist, und mit einem Ventilkörper (24), wobei die Einrichtung unter dem direkten Einfluss des formgebenden Druckes den Druck zum Halten des Zuschnitts reduziert, wenn der formgebende Druck einen vorbestimmten Wert erreicht.

2. Vorrichtung nach Anspruch 1, **dadurch gekennzeichnet, dass** die Einrichtung (20) den Ventilkopf (25) umfasst, der mit dem Ventilkörper (24) verbunden ist.

3. Vorrichtung nach Anspruch 2, **dadurch gekennzeichnet, dass** das Ventil ferner einen Einlass (22), der mit der Einrichtung (15, 16, 17a) zum Zuführen und Aufrechterhalten des hydraulischen Druckes zum Halten des Zuschnitts in Verbindung steht, einen Auslass (23) und ein elastisches Element (26) aufweist, dass der Ventilkörper (24) zwischen einer offenen Position, in der der Einlass (22) mit dem Auslass (23) in Verbindung steht, und einer geschlossenen Position, in der der Einlass (22) nicht mit dem Auslass (23) in Verbindung steht, bewegbar ist, wobei das elastische Element (26) vorgespannt wird, um den Ventilkörper (24) in eine Richtung entgegengesetzt zur Wirkung des formgebenden Druckes in Richtung der geschlossenen Position zu drücken.

4. Vorrichtung nach Anspruch 3, **dadurch gekennzeichnet, dass** die Steifheit des elastischen Elements (26) zur Variierung des formgebenden Drucks, bei welchem das Ventil (20) öffnet, einstellbar ist.

5. Vorrichtung nach einem der vorhergehenden Ansprüche, **dadurch gekennzeichnet, dass** die erste Einrichtung (18) zum Erzeugen des Druckes zum Halten des Zuschnitts so ausgebildet ist, dass diese von der Vorrichtung abkoppelbar und außerhalb der Fluidzellenpresse (1) positionierbar ist, wenn der formgebende Druck ausgeübt wird.

6. Fluidzellenpresse mit einer Vorrichtung gemäß einem der vorhergehenden Ansprüche.

## Revendications

1. Dispositif de maintien, à la manière d'un freinage (31), d'un flan, de préférence en forme de tôle, lorsque l'on forme le flan dans une presse (1) à cellule emplie de fluide, dans lequel le flan est formé par application d'une pression hydraulique de formage, par l'intermédiaire d'un diaphragme (4) élastique, à un côté du flan, ce dispositif comprenant des premiers moyens (18) destinés à engendrer une pression hydraulique de maintien du flan et des deuxièmes moyens (15, 16, 17a) destinés à appliquer cette pression à un élément (14) mobile et à maintenir cette pression, l'élément mobile étant apte, tant que la pression de maintien du flan est maintenue, à maintenir une partie du flan, à la manière d'un freinage, contre un support (13), **caractérisé par** des moyens (20) comprenant une soupape ayant une tête (25) de soupape qui a au moins une surface (25a) qui est soumise à la pression de formage et un corps (24) de soupape, ces moyens réduisant, sous l'influence directe de la pression de formage, la pression de maintien du flan lorsque la pression de formage atteint une valeur déterminée à l'avance.

2. Dispositif selon la revendication 1, **caractérisé en ce que** les moyens (20) comprennent la tête (25) de la soupape, qui est reliée au corps (24) de la soupape.

3. Dispositif selon la revendication 2, **caractérisé en ce que** la soupape comprend aussi une entrée (22) qui communique avec les moyens (15, 16, 17a) destinés à fournir et à maintenir la pression hydraulique de maintien du flan, une sortie (23) et un élément (26) élastique, **en ce que** le corps (24) de la soupape est mobile entre une position ouverte, dans laquelle l'entrée (22) communique avec la sortie (23), et une position fermée, dans laquelle l'entrée (22) ne communique pas avec la sortie (23), l'élément (26) élastique étant précontraint pour repousser le corps (24) de la soupape dans un sens opposé à l'action de la pression de formage vers la position fermée.

4. Dispositif selon la revendication 3, **caractérisé en ce que** la raideur de l'élément (26) élastique est réglable pour faire varier la pression de formage à laquelle la soupape (20) s'ouvre.

5. Disposition selon les revendications précédentes, **caractérisé en ce que** les premiers moyens (18) destinés à engendrer la pression de maintien du flan sont aptes à être déconnectés du dispositif et à être placés à l'extérieur de la presse (1) à cellule emplie de fluide lorsque la pression de formage est appliquée.

6. Presse à cellule emplie de fluide, comprenant un dispositif suivant l'une quelconque des revendications précédentes.
